# EUROPEAN PATENT APPLICATION

(11) **EP 2 849 081 A1**
(43) Date of publication of application: **18.03.2015**
(21) Application number: 13788134.8
(22) Date of filing: 03.05.2013
(51) Int. Cl.: G06F 15/76

(54) **EMBEDDED SYSTEM CONTROLLER**

(30) Priority: 09.05.2012 CN 201210143616
(71) Applicant: Gigadevice Semiconductor (Beijing) Inc., Beijing 100083 (CN)
(72) Inventor: LI, Baokui, Beijing 100083 (CN); WANG, Nanfei, Beijing 100083 (CN); WANG, Jinghua, Beijing 100083 (CN)
(74) Representative: Bohest AG
(86) International application number: PCT/CN2013/075149
(87) International publication number: WO 2013/166939

(57) **Abstract**

An embedded system controller comprises a main chip and a flash memory. The main chip comprises: a bus; a random access memory; and a storage control module which is configured to copy program data to be used to the random access memory from the flash memory, and also configured to read required program data from the random access memory when receiving a read access request from the bus and write program data to be written into the random access memory and the flash memory when receiving a write access request from the bus. The present application can allow the main chip of an embedded system controller to be manufactured using an advanced standard circuit manufacturing process and achieve excellent performance and power consumption.

## Description

### Technical Field

The present application relates to an electronic field, in particular, to an embedded system controller.

### Background

During normal running of an embedded system, a Central Processing Unit (CPU) in an embedded system controller accesses a program memory mainly by read operations, and thus a read rate of the program memory directly affects performance of the embedded system. Currently, a flash memory is the most common program memory in the embedded system.

Due to limitations of interfaces, an off-chip flash memory can hardly satisfy demands on the performance of the program memory required for the embedded system, and thus an embedded flash memory technology emerged. The embedded flash memory technology is utilized to integrate a flash memory circuit and a standard circuit onto the same chip to overcome the limitations of the interfaces, thereby enabling the CPU to read a program instruction from the flash memory periodically. Currently, the embedded systems manufactured by major manufacturers (such as ST, NXP, TI, and FreeScale) typically utilize an embedded flash memory as the program memory.

However, the most severe disadvantage of the embedded flash memory is that the embedded flash memory is difficult to be manufactured and its manufacturing process is far behind that of the standard circuit. Currently, the manufacturing process of the embedded flash memory of major chip foundries is still immature in terms of a 130nm manufacturing process while the manufacturing process of the standard circuit has achieved a 40nm manufacturing process. For the same circuit, the area of a chip manufactured by employing the 40nm manufacturing process is sharply decreased to one tenth of the area of a chip manufactured by employing the 130nm manufacturing process, and the former chip further has much lower power consumption and better performance than the latter chip. Additionally, a production yield of the embedded flash memory chips is also much lower than that of the standard circuit chips, and the embedded flash memory further significantly increases mass production testing time of the main chip. Besides, the read rate of the flash memory is even a bottleneck of the performance of the embedded system.

### Summary

A technical problem to be solved by the present disclosure is how to manufacture the main chip of the embedded system controller by an advanced manufacturing process of the standard circuit and achieve an improved performance and power consumption meanwhile.

In order to solve the above problem, the present disclosure provides an embedded system controller, including: a main chip, and a flash memory; wherein,

the main chip includes a bus;

a random access memory;

a storage control module configured for copying program data to be used from the flash memory to the random access memory, reading requested program data from the random access memory when a read access request is received from the bus, and writing program data for writing into the random access memory and the flash memory when a write access request is received from the bus.

Preferably, the random access memory is an SRAM; and
the main chip and the flash memory are built in the same package by a multiple chip package technology.

Preferably, the random access memory has the same capacity as the flash memory; and
copying program data to be used from the flash memory to the random access memory includes copying all data from the flash memory to the random access memory.

Preferably, a capacity of the random access memory is a minimal capacity for storing the program data required for ensuring normal running of a system; and
copying program data to be used from the flash memory to the random access memory includes copying the program data required for ensuring normal running of the system into the random access memory.

Preferably, the storage control module includes:
a random access memory(RAM) control module, and a flash memory control module;
a bus interface module configured for receiving the read access request and the write access request from a system bus, and transforming the read access request and the write access request for the program data into a read instruction and a write instruction, respectively; and further configured for sending the read program data to the system bus; and
a main control module configured for: controlling, according to the read instruction, the RAM control module to read the requested program data from the random access memory and send the read program data to the bus interface module; controlling, according to the write instruction, the RAM control module to receive the program data for writing from the bus interface module and write the received program data into the random access memory; and controlling the flash memory control module to receive the program data for writing from the bus interface module and write the received program data into the flash memory; and further configured for controlling the flash memory control module to read the program data to be used from the flash memory when the program data to be used is absent in the random access memory, and controlling the RAM control module to write the program data to be used into the random access memory.

Preferably, the storage control module further includes:
a configuration register configured for storing configuration information and status information of the storage control module; wherein
the read access request and the write access request on the system bus received by the bus interface module further comprise a read access request and a write access request for the configuration register, and the bus interface module is configured for directly performing a read/write operation on the configuration register according to the read access request and the write access request for the configuration register.

Preferably, the storage control module further includes:
an encryption module configured for encrypting the program data for writing received from the bus interface module, and then sending the encrypted program data to the flash memory control module; and
a decryption module configured for decrypting the program data to be used which is read by the flash memory control module, and then sending the decrypted program data to the RAM control module.

Preferably, the main control module is further configured for sending a low power consumption request to the flash memory control module when finishing copying the program data to be used; sending the low power consumption request to the flash memory control module after delaying by a predetermined time when finishing writing the program data for writing; and sending a low power consumption exiting request to the flash memory control module when copying the program data to be used is required or the write instruction is received; and
the flash memory control module is further configured for controlling the flash memory to enter into an extreme power saving mode when the low power consumption request is received, and controlling the flash memory to exit the extreme power saving mode when the low power consumption exit request is received.

Preferably, the storage control module further includes:
a counter;
the main control module is further configured for clearing the counter and starting the counter to count when the program data for writing is finished writing, and sending the low power consumption request when the counter overflows.

Preferably, the storage control module further includes:
a multiplexer MUX, wherein the first input port of the multiplexer is connected to the data writing port of the bus interface module, the second input port of the multiplexer is connected to the data reading port of the flash memory control module, the output port of the multiplexer is connected to the data writing port of the RAM control module, and the control port of the multiplexer is connected to the main control module;
the main control module is further configured for controlling the multiplexer to output program data from the second input port when copying the program data to be used is required and controlling the multiplexer to output program data from the first input port when the write instruction is received.

The present disclosure further provides a computer readable recording medium having program recorded thereon for embodying the embedded system controller of claim 1.

In the technical solution of the present disclosure, the on-chip random access memory (RAM) cooperates with the off-chip flash memory to implement the program memory of the system, thus such technical solution is most advantageous for employing the advanced manufacturing process of the standard circuit but avoiding the outdated manufacturing process of the embedded flash memory in the embedded system. Furthermore, the technical solution of the present disclosure is superior to the technical solution of the embedded flash memory in terms of the performance and power consumption.

### Description of Drawings

Figure 1 is a schematic block diagram showing an embedded system controller according to a first embodiment; and
Figure 2 is a schematic block diagram showing a storage control module according to the first embodiment.

### Detailed description of the Embodiments

The technical solutions of the present disclosure are described in more detail below in combination with accompanying drawings and embodiments.

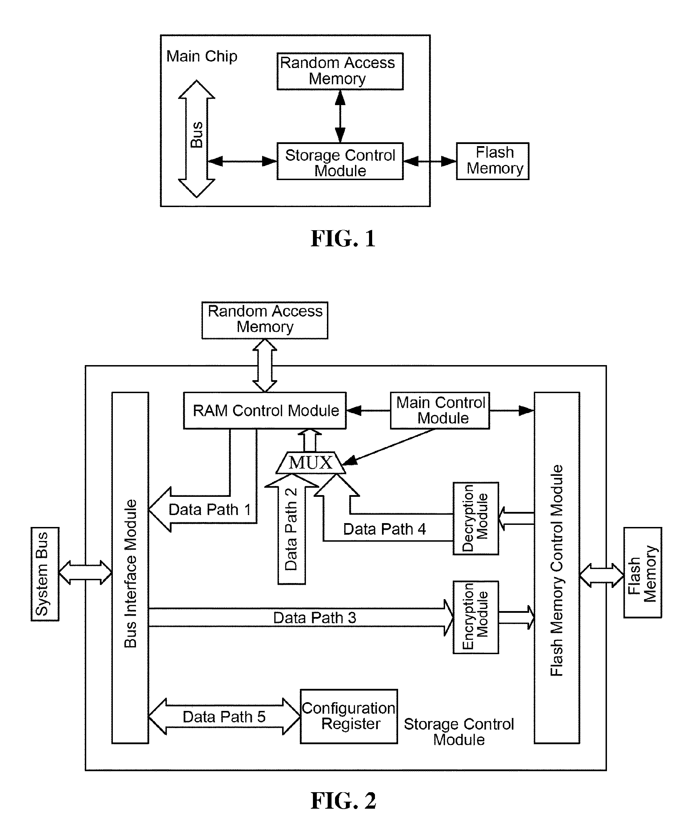

As shown in Figure 1, a first embodiment provides an embedded system controller including a main chip and a flash memory.

The main chip includes:
a bus;
a random access memory; and
a storage control module configured for copying program data to be used from the flash memory to the random access memory, reading requested program data from the random access memory when a read access request is received from the bus, and writing program data for writing into the random access memory and the flash memory when a write access request is received from the bus.

Of course, the bus of the embedded system controller may further be connected with other elements, such as a CPU, various devices and a Direct Memory Access (DMA) module. The other elements further connected to the bus can be determined with reference to the related known art.

In the present embodiment, the random access memory may be, but not limited to, a Static Random Access Memory (SRAM), a Dynamic Random Access Memory (DRAM), and the like.

The random access memory is manufactured by the manufacturing process of the standard circuit and has fast read and write rates and low power consumption, but will lose information stored therein after being powered off. A circuit of the flash memory is relatively special and is difficult to be integrated into a standard circuit chip, but the area of the circuit of the flash memory is rather small and the information stored in the flash memory will not be lost after the power supply to the flash memory is lost. The flash memory has disadvantages such as slow read and write speeds and high power consumption. In the present embodiment,the random access memory is used as a program memory providing program data in a read access, and thus a read operation on the program memory is equivalent to a read operation on the random access memory, so that both of the performance and the power consumption in the present embodiment are superior to the technical solution using the embedded flash memory. Additionally, both the random access memory and the flash memory are used as the program memory for storing program data, and thus a write operation on the program memory is equivalent to a simultaneous write operation on both the random access memory and the flash memory in order to ensure that the program data can be stored as readable data (i.e., the program data stored in the random access memory) as quickly as possible and the program data stored in the flash memory would not be lost after the system is powered off. Since the embedded system accesses the program memory mainly by the read operations during normal running of the embedded system, the technical solution of the present embodiment is superior to the technical solution using the embedded flash memory in terms of the performance and power consumption.

In the case of the SRAM for example, the SRAM has much higher read and write rates and much lower power consumption as compared with the flash memory. The performance comparison of the SRAM with the flash memory can be seen in detail in Table 1 below.

**Table 1: performance parameters of the flash memory and the SRAM**

| | 130nm manufacturing process of the embedded flash memory | 130nm manufacturing process of the SRAM | 90nm manufacturing process of the SRAM |
|---|---|---|---|
| Read access time | 50ns | 3ns | 1.3ns |
| Read access power Work frequency: 20MHz | 15mW | 3.7mW | 2.7mW |
| Read access power Work frequency: 50MHz | Unreachable Performance | 9.5mW | 6.8mW |
| Read access power Work frequency: 200MHz | Unreachable Performance | 37.8mW | 27.1mW |
| Write access time | 20µs | 3ns | 1.3ns |
| Write access power | 10.5mW | 5.0mW | 1.7mW |

The cost of the embedded system controller according to the present embodiment is equivalent to the cost of the main chip plus that of the flash memory chip. It is known that the flash memory chip has a low price, and the price of a NOR type flash memory with a 1Mb capacity available in the market is only about eight to nine US cents. The SRAM has a larger area than the flash memory in terms of the same manufacturing process and the same capacity. If the embedded flash memory is replaced by the SRAM with the same capacity, the main chip has a larger area than the embedded flash memory chip, even so, the manufacturing cost of the embedded flash memory chip is usually about 30% higher than the manufacturing cost of the standard circuit chip in terms of the same manufacturing process and the same area. Furthermore, the embedded flash memory can decrease the production yield of the main chip and increase the testing time of the main chip, thereby increasing the cost. In the present embodiment, the main chip can be manufactured by the more advanced manufacturing process of the standard circuit. For the same circuit, the area of a chip manufactured by the 90nm manufacturing process may be a half of the area of a chip manufactured by the 130nm manufacturing process; and the area of a chip manufactured by a 40nm manufacturing process may be one tenth of the area of a chip manufactured by the130nm manufacturing process. It can be seen that the manufacturing cost of the technical solution of the present embodiment based on the more advanced manufacturing process is lower than that of the technical solution of the embedded flash memory, and for a system with a relatively smaller capacity, the manufacturing cost of the technical solution of the present embodiment may also be lower than that of the technical solution of the embedded flash memory even if the chips are manufactured by the same manufacturing process.

In the present embodiment, the main chip and the flash memory chip can be integrated into the same package by means of a Multiple Chip Package (MCP) technology so as to make the volume of the resultant product be smaller.

In the present embodiment, the storage control module is a core component of the present disclosure for controlling cooperation of the random access memory with the off-chip flash memory in order to achieve a program memory with a high performance. As shown in Figure 2, the storage control module can specifically include:
a random access memory (RAM) control module, and a flash memory control module;
a bus interface module configured for receiving the read access request and the write access request from a system bus, and transforming the read access request and the write access request for the program data into a read instruction and a write instruction, respectively; and further configured for sending the read program data to the system bus; and
a main control module configured for: controlling, according to the read instruction, the RAM control module to read the requested program data from the random access memory and send the read program data to the bus interface module; controlling, according to the write instruction, the RAM control module to receive the program data for writing from the bus interface module and write the received program data into the random access memory; and controlling the flash memory control module to receive the program data for writing from the bus interface module and write the received program data into the flash memory; and further configured for controlling the flash memory control module to read the program data to be used from the flash memory when the program data to be used is absent in the random access memory, and controlling the RAM control module to write the program data to be used into the random access memory.

In the present embodiment, the program data to be used may be all of the data in the flash memory, or may be a part of the data in the flash memory determined according to system requirements. In an implementation, the random access memory has the same capacity as the flash memory, and the copying of the program data to be used from the flash memory to the random access memory may be that all of the data is copied from the flash memory to the random access memory, so that it is unnecessary to copy the data specially during continuous running of the system, thereby achieving a higher operating efficiency. In another implementation, the capacity of the random access memory is a minimal capacity for storing the program data required for ensuring normal running of the system, thus, the capacity of the random access memory may be smaller in this implementation, and the copying of the program data to be used from the flash memory to the random access memory may be that the program data required for ensuring normal running of the system is copied into the random access memory.

In the present embodiment, the storage control module can further include a configuration register configured for storing configuration information and status information of the storage control module.

The read access request and the write access request from the system bus received by the bus interface module further include a read access request and a write access request for the configuration register. The bus interface module classifies the access to the system bus into two types of accesses, one of which is an access to the configuration register and the other of which is an access to the program storage space (i.e. the read access request and the write access request for the program data), according to different address spaces. The bus interface module directly performs a read/write operation on the configuration register according to the read access request and the write access request for the configuration register.

In the present embodiment, the storage control module can further include an encryption module and a decryption module.

The encryption module is configured for encrypting the program data for writing received from the bus interface module and then sending the encrypted program data to the flash memory control module.

The decryption module is configured for decrypting the program data to be used read by the flash memory control module and then sending the decrypted program data to the RAM control module.

In the present embodiment, an algorithm for the encryption corresponds to an algorithm for the decryption, but the present embodiment is not limited to the use of specific encryption/decryption algorithms, and one encryption/decryption algorithm or a combination of more than one encryption/decryption algorithms may be used in the present embodiment.

It can be seen from Fig. 2 that the storage control module includes five data paths containing first to fifth data paths below.

The first data path refers to a data path from a data reading port of the RAM control module to a data reading port of the bus interface.

The second data path refers to a data path from a data writing port of the bus interface to a data writing port of the RAM control module.

The third data path refers to a data path from the data writing port of the bus interface to a data writing port of the flash memory control module through the encryption module.

The fourth data path refers to a data path from a data reading port of the flash memory control module to the data writing port of the RAM control module through the decryption module.

The fifth data path refers to a data path between the bus interface and the configuration register.

The SRAM is taken for example below to describe an operating flow of the storage control module by four operating modes (i.e., first to fourth modes) and three power consumption modes (i.e., first to third power consumption modes).

The first operating mode refers to a copying mode.

A function in the copying mode is to copy data from the flash memory to the SRAM via the fourth data path. In this copying mode, the flash memory control module is in charge of reading the data stored in the flash memory, the decryption module is in charge of decrypting the read data, and the RAM control module is in charge of storing the decrypted data to the SRAM. The main control module determines the time of entering into the copying mode, the amount of data to be copied, which part of the data stored in the flash memory is to be copied, and which address block in the SRAM is used for storing the copied part of data, according to individual requirements of the system. The basic principle to be followed is that the program required for current running of the system must have been copied to the SRAM through the copying mode. In the copying mode, the bus interface module enables the system to be in a waiting state through a bus response signal. To avoid impacting consistent running of the system, the copying mode is started only in the idle time during the running of the system.

For example, in an embedded system having an interface supporting ten languages, a program of the embedded system includes a system program of 22K bytes and a word library of 100K bytes, where the word library for each language has a capacity of 10K bytes. Thus, such embedded system requires a flash memory with a capacity of 128K bytes (where only 122K bytes are used) and an SRAM with a capacity of 32K bytes. When being powered on and reset, the embedded system enters into the copying mode immediately to copy the system program of 22K bytes and a default word library of 10K bytes to the SRAM. After the system is started, the system enters into the copying mode again only when a user requests to switch to an interface of another language, and replaces the original word library by another selected word library.

In a simple application instance, after the embedded system is powered on and reset, the embedded system enters into the copying mode immediately to copy all of the data in the flash memory to the SRAM, and the embedded system no longer enters into the copying mode anymore after being started. Therefore, the embedded system need not look for proper idle time to enter into the copying mode, but an SRAM having a larger capacity is required.

The second operating mode refers to a read mode.

A function in the read mode is to read data stored in the SRAM and send the read data to the system bus via the first data path. When the system performs the read access to the program storage space, the storage control module enters into the read mode. In the read mode, the RAM control module is in charge of reading the data in the SRAM, and the bus interface module is in charge of sending the read data to the system bus.

The third operating mode refers to a programming mode.

A function in the programming mode is to simultaneously write data to the SRAM and the flash memory via the second data path and the third data path, respectively, in order to ensure the consistency of the data in the two storage modules, i.e. the SRAM and the flash memory. When the system performs a write access to the program storage space, the storage control module enters into the programming mode. In the programming mode, the bus interface module is in charge of receiving the program data for writing from the system bus, the encryption module is in charge of encrypting the program data for writing, the flash memory control module is in charge of storing the encrypted program data to the flash memory, and the RAM control module is in charge of writing the program data for writing that is not encrypted to the SRAM.

The fourth operating mode refers to an idle mode.

In the idle mode, all of the modules in the storage control module stop working and are in a standby state.

The first power consumption mode refers to a normal mode.

In the normal mode, all of the modules in the storage control module are in a state of being normally powered, and all of the operating modes can be operated properly.

The second power consumption mode refers to a low power consumption mode.

When entering into the low power consumption mode, the flash memory control module can control the flash memory to enter into an extreme power saving mode (a mode which the flash memory owns). When exiting the low power consumption mode, the flash memory control module controls the flash memory to exit the extreme power saving mode. In the extreme power saving mode, the power consumption of the flash memory is significantly decreased (to about 10 to 20 microwatts), but the flash memory cannot accept the read/write access, so that the copying mode and the programming mode cannot be operated properly in this low power consumption mode.

Since the program storage space is mostly accessed by the read access in the normal running of the system, the storage control module is in the low power consumption mode in most of the time.

The third power consumption mode refers to a turn-off mode.

When entering into the turn-off mode, the flash memory control module cuts off the power supply of the flash memory. When exiting the turn-off mode, the flash memory control module starts the power supply of the flash memory. When entering into a standby mode, the system turns off the clock of the storage control module, but before the system turns off the clock of the storage control module, the storage control module enters into the turn-off mode. When the system is awakened, the storage control module exits the turn-off mode simultaneously. In the turn-off mode, the flash memory has no power consumption, and all of the operating modes cannot be operated.

In the present embodiment, the main control module is in charge of controlling the operating modes of the storage control module to make each of the modules cooperate to perform the function required by each of the operating mode.

Besides performing the data operations such as a read operation, a write operation, and an erasing operation on the flash memory, the flash memory control module can further perform operations of reading an identity (ID), reading a state, and switching between various operating modes for instance the operation of entering into or exiting the low power consumption mode, and can control the stop and start of the power supply of an off-chip flash memory through a power supply management module.

In the present embodiment, the main control module can further be configured for sending a low power consumption request to the flash memory control module when the program data to be used is finished copying; sending the low power consumption request to the flash memory control module after a delay of a predetermined time when the program data for writing is finished writing; and sending a low power consumption exiting request to the flash memory control module when the program data to be used need be copied or a write instruction is received.

The flash memory control module is further configured for controlling the flash memory to enter into the extreme power saving mode when the low power consumption request is received, and controlling the flash memory to exit the extreme power saving mode when the low power consumption exiting request is received.

In the present embodiment, the main control module may, but not limited to, send the low power consumption request/the low power consumption exiting request through a low power consumption requesting flag. When the low power consumption requesting flag is set to be enabled, the low power consumption request is sent to indicate that the system enters into the low power consumption mode, and the flash memory control module receives the request by detecting the low power consumption requesting flag. When the flag is set to be disabled, the low power consumption exiting request is sent to indicate that the system exits the low power consumption mode.

In the copying mode and the programming mode, the low power consumption requesting is always disabled. When the copying mode is exited, the flag is set immediately to be enabled.

In the present embodiment, the main control module may delay for a time through, but not limited to, a counter.

The storage control module further includes a counter.

When the program data for writing is finished writing, the main control module clears the counter and starts the counter to count, and sends the low power consumption request when the counter overflows.

When the programming mode is exited, the counter is cleared and starts to count. The low power consumption requesting flat is set to be enabled only when the counter overflows. A function of the counter is to prevent the storage control module from frequently entering into and exiting the low power consumption mode.

In the present embodiment, the storage control module may further include:

a multiplexer MUX, the first input port of which is connected to the data writing port of the bus interface module, the second input port of which is connected to the data reading port of the flash memory control module (via the decryption module, if any), the output port of which is connected to the data writing port of the RAM control module, and the control port of which is connected to the main control module.

When the program data to be used need be copied, the main control module controls the multiplexer to output the program data from the second input port. When the write instruction is received, the main control module controls the multiplexer to output the program data from the first input port.

The present disclosure further provides a computer readable recording medium with program recorded thereon for embodying the embedded system controller of claim 1.

The computer readable recording medium includes any mechanism for storing or transmitting information in a computer readable form. For example, the machine readable medium includes a read only memory (ROM), a random access memory (RAM), a magnetic disk storage medium, an optical storage medium, a flash storage medium, a transmission signal in the form of electricity, light, sound or others (such as a carrier wave, an infrared signal, and a digital signal) and so on.

Certainly, the present disclosure can further have other embodiments, and various corresponding changes and modifications of the present disclosure can be made by those skilled in the art without departing from the spirits and essences of the present disclosure. However, these corresponding changes and modifications should fall into the scope of protection of the claims of the present disclosure.

## Claims

1. An embedded system controller, comprising a main chip comprising a bus,
wherein the embedded system controller further comprises a flash memory; and
the main chip further comprises:
a random access memory; and
a storage control module configured for copying program data to be used from the flash memory to the random access memory, reading requested program data from the random access memory when a read access request is received from the bus, and writing program data for writing into the random access memory and the flash memory when a write access request is received from the bus.

2. The controller of claim 1, wherein,
the random access memory is an SRAM; and
the main chip and the flash memory are built in the same package by a multiple chip package technology.

3. The controller of claim 1, wherein,
the random access memory has the same capacity as the flash memory; and
copying program data to be used from the flash memory to the random access memory comprises copying all data from the flash memory to the random access memory.

4. The controller of claim 1, wherein,
a capacity of the random access memory is a minimal capacity for storing the program data required for ensuring normal running of a system; and
copying program data to be used from the flash memory to the random access memory comprises copying the program data required for ensuring normal running of the system into the random access memory.

5. The controller of any of claims 1 to 4, wherein, the storage control module comprises:
a random access memory(RAM) control module;
a flash memory control module;
a bus interface module configured for receiving the read access request and the write access request from a system bus, and transforming the read access request and the write access request for the program data into a read instruction and a write instruction, respectively; and further configured for sending the read program data to the system bus; and
a main control module configured for: controlling, according to the read instruction, the RAM control module to read the requested program data from the random access memory and send the read program data to the bus interface module; controlling, according to the write instruction, the RAM control module to receive the program data for writing from the bus interface module and write the received program data into the random access memory; and controlling the flash memory control module to receive the program data for writing from the bus interface module and write the received program data into the flash memory; and further configured for controlling the flash memory control module to read the program data to be used from the flash memory when the program data to be used is absent in the random access memory, and controlling the RAM control module to write the program data to be used into the random access memory.

6. The controller of claim 5, wherein, the storage control module further comprises:
a configuration register configured for storing configuration information and status information of the storage control module; wherein
the read access request and the write access request on the system bus received by the bus interface module further comprise a read access request and a write access request for the configuration register, and the bus interface module is configured for directly performing a read/write operation on the configuration register according to the read access request and the write access request for the configuration register.

7. The controller of claim 5, wherein, the storage control module further comprises:
an encryption module configured for encrypting the program data for writing received from the bus interface module, and then sending the encrypted program data to the flash memory control module; and
a decryption module configured for decrypting the program data to be used which is read by the flash memory control module, and then sending the decrypted program data to the RAM control module.

8. The controller of claim 5, wherein,
the main control module is further configured for sending a low power consumption request to the flash memory control module when finishing copying the program data to be used; sending the low power consumption request to the flash memory control module after delaying by a predetermined time when finishing writing the program data for writing; and sending a low power consumption exiting request to the flash memory control module when copying the program data to be used is required or the write instruction is received; and
the flash memory control module is further configured for controlling the flash memory to enter into an extreme power saving mode when the low power consumption request is received, and controlling the flash memory to exit the extreme power saving mode when the low power consumption exit request is received.

9. The controller of claim 5, wherein the storage control module further comprises:
a counter;
the main control module is further configured for clearing the counter and starting the counter to count when the program data for writing is finished writing, and sending the low power consumption request when the counter overflows.

10. The controller of claim 5, wherein the storage control module further comprises:
a multiplexer MUX, wherein the first input port of the multiplexer is connected to the data writing port of the bus interface module, the second input port of the multiplexer is connected to the data reading port of the flash memory control module, the output port of the multiplexer is connected to the data writing port of the RAM control module, and the control port of the multiplexer is connected to the main control module;
the main control module is further configured for controlling the multiplexer to output program data from the second input port when copying the program data to be used is required and controlling the multiplexer to output program data from the first port when the write instruction is received.

11. A computer readable recording medium having program recorded thereon for embodying the embedded system controller of claim 1.
